# EUROPEAN PATENT APPLICATION

(11) **EP 4 769 722 A1**
(43) Date of publication of application: **01.07.2026**
(21) Application number: 25849210.7
(22) Date of filing: 03.03.2025
(51) Int. Cl.: H01M 50/242, H01M 50/583, H01M 50/244, H01M 50/289

(54) **BATTERY PACK**

(30) Priority: 30.09.2024 CN 202422394942 U; 30.09.2024 CN 202411379018
(71) Applicant: Eve Energy Co., Ltd, Huizhou, Guangdong 516006 (CN)
(72) Inventor: LI, Xingren, Guangdong 516006 (CN)
(74) Representative: Weickmann & Weickmann PartmbB
(86) International application number: PCT/CN2025/080131
(87) International publication number: WO 2026/065943

(57) **Abstract**

A battery pack includes a housing (1) and a BDU (2). A battery module and an expansion beam (11) are disposed in the housing (1). The battery module includes multiple cells (3) arranged along the first direction. At each of the two ends of the battery module along the first direction, one expansion beam (11) is attached. The expansion beam (11) is configured to generate elastic deformation along the first direction at least when the multiple cells (3) expand. The BDU (2) is located between the expansion beam (11) and the housing (1). The BDU (2) includes a fixing bracket (21), a BDU body (22), and a fastener (23). The fixing bracket (21) is fixedly connected to the expansion beam (11). The BDU body (22) is provided with a sliding portion. The fastener (23) is fixedly connected to the fixing bracket (21) and slidably disposed on the sliding portion along the first direction.

## Description

This application claims priority to Chinese Patent Application No. 202422394942.4 and Chinese Patent Application No. 202411379018.7, filed with the China National Intellectual Property Administration (CNIPA) on Sep. 30, 2024, the disclosures of which are incorporated herein by reference in their entireties.

### TECHNICAL FIELD

The present application relates to the field of battery technology, for example, a battery pack.

### BACKGROUND

A battery disconnect unit (BDU) is an important component in a battery pack and is often used as a power distribution box. When the battery pack system reports an error, the BDU can cut off the internal current of the power battery to ensure system safety.

### TECHNICAL PROBLEM

In a battery pack of the related art, a fixing bracket connected to a BDU base is typically welded to an expansion beam in the housing of the battery pack. When a battery module in the battery pack expands, the expansion beam bends and deforms, causing the fixing bracket and the BDU to move. As a result, the BDU is compressed by both the expansion beam and the housing of the battery pack, leading to deformation of the BDU housing and adversely affecting its service life.

At present, the related art commonly uses methods such as thickening the expansion beam to increase the strength of the expansion beam or adding a cross beam (that is, beam perpendicular to the extension direction of the expansion beam) to mitigate the expansion force generated by the battery module. However, both methods make additional space occupied in the housing of the battery pack that would otherwise be available for other components, thereby complicating the arrangement and manufacturing process of the battery pack.

### TECHNICAL SOLUTION

The present application provides a battery pack to address the technical shortcomings in the related art, where thickening an expansion beam or adding a cross beam in the housing of a battery pack occupies additional space for other components, thereby adversely affecting the design and manufacturing of the battery pack.

The present application provides a battery pack. The battery pack has a first direction and a second direction perpendicular to each other. The battery pack includes a housing and a BDU.

An accommodation cavity is disposed in the housing. A battery module and an expansion beam are disposed in the accommodation cavity. The battery module includes multiple cells. The cells are arranged in sequence along the first direction. At each of the two ends of the battery module along the first direction, one expansion beam is attached. The expansion beam is configured to generate elastic deformation along the first direction at least when the cells expand.

The BDU is disposed in the accommodation cavity and located between the expansion beam and the housing. The BDU includes a fixing bracket, a BDU body, and a fastener. The fixing bracket is fixedly connected to the expansion beam. The BDU body is provided with a sliding portion. The fastener is fixedly connected to the fixing bracket and slidably disposed on the sliding portion along the first direction.

### BENEFICIAL EFFECTS

The sliding portion disposed on the BDU body allows the fastener to slide along the sliding portion together with the expansion beam when the expansion beam undergoes elastic deformation, preventing the BDU body from moving and keeping the position of the BDU body unchanged. In other words, the sliding portion absorbs the displacement of the fixing bracket when the expansion beam deforms elastically, thereby preventing the BDU body from being compressed and deformed due to the movement of the BDU body. This enhances the operational safety of the BDU body and avoids occupying additional mounting space in the housing of the battery pack for other components, and preventing the overall design and manufacturing of the battery pack from becoming complicated.

### BRIEF DESCRIPTION OF DRAWINGS

FIG. 1 is a view of the internal structure of a battery pack according to embodiments of the present application.
FIG. 2 is an enlarged view of part A of FIG. 1.
FIG. 3 is a section view taken along line B-B of FIG. 2.
FIG. 4 is an enlarged view of part C of FIG. 3.
FIG. 5 is a view of the structure of a BDU according to embodiments of the present application.
FIG. 6 is an exploded view of the structure of a BDU according to embodiments of the present application.
FIG. 7 is an enlarged view of part D of FIG. 6.
FIG. 8 is an enlarged view of part E of FIG. 6.
FIG. 9 is a view of a first clearance chamfer and a second clearance chamfer according to embodiments of the present application.

### Reference list

1. housing; 2. BDU; 3. cell;
11. expansion beam; 12. cross beam;
21. fixing bracket;
22. BDU body; 2201. mounting waist-shaped hole; 2202. mounting through hole; 221. upper cover; 2211. upper cover body; 2212. clamping structure; 22121. clamping groove; 22122. clamping plate; 22123. rib; 22124. first chamfer; 2213. avoidance gap; 2214. pressing groove; 2215. limiting plate; 222. base; 2221. boss; 22211. second chamfer; 2222. guide structure; 223. electrical component;
23. fastener; 231. locking bolt; 2311. third flange; 232. rivet nut; 2321. first flange; 233. first screw sleeve; 2331. screw sleeve body; 2332. second flange;
24. locking member;
31. first clearance chamfer; 32. second clearance chamfer

### DETAILED DESCRIPTION

The solutions of the present application are described hereinafter in conjunction with embodiments and drawings.

In drawings of embodiments of the present application, the double-headed arrow labeled X represents a first direction, the double-headed arrow labeled Y represents a second direction, and the double-headed arrow labeled Z represents a third direction. In this embodiment, the first direction X corresponds to the thickness direction of a cell 3. For a prismatic cell 3, the direction corresponding to its two large surfaces is the thickness direction, that is, the first direction X. The second direction Y corresponds to the height direction of a cell 3. The third direction Z corresponds to the length direction of a cell 3. In this embodiment, the first direction X, the second direction Y, and the third direction Z are perpendicular to each other.

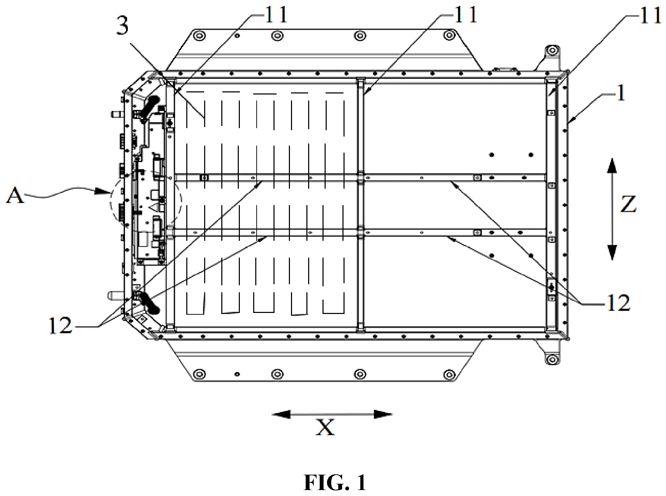

This embodiment provides a battery pack. The battery pack includes a housing 1 and an upper cover 221 matching the housing 1. An accommodation cavity is disposed in the housing 1. The upper cover 221 is fastened to the housing 1 to seal the accommodation cavity. Referring to FIG. 1, a battery module and an expansion beam 11 are disposed in the accommodation cavity, and the battery module includes multiple cells 3. The cells 3 are arranged in sequence along the first direction. At each of the two ends of the battery module along the first direction, one expansion beam 11 is attached. The length of the expansion beam 11 extends along the third direction. The two ends of the expansion beam 11 are secured to the inner side wall of the housing 1. In this embodiment, the battery pack abandons a traditional module structure. Instead, multiple cells 3 are arranged in a group to form the battery module. The battery module is disposed in the accommodation cavity. The battery module is stabilized by expansion beams 11 attached at both ends to prevent movement of the battery pack. This allows the battery pack to be assembled from the battery module, simplifies the assembly process of the battery pack, reduces the number of components, decreases the overall size and production cost of the battery pack, and improves the energy density of the battery pack.

In addition, during the charging or discharging process of the cell 3, the cell expands along the thickness direction, causing the overall size of the battery module to expand towards the two sides along the first direction. The expansion beam 11 can undergo elastic deformation at least along the first direction when compressed, thereby providing space for the expansion of the cell 3 through the elastic deformation.

It is to be understood that more expansion beams 11 may be disposed in the battery pack along the first direction to define more assembly spaces for accommodating and assembling more battery modules.

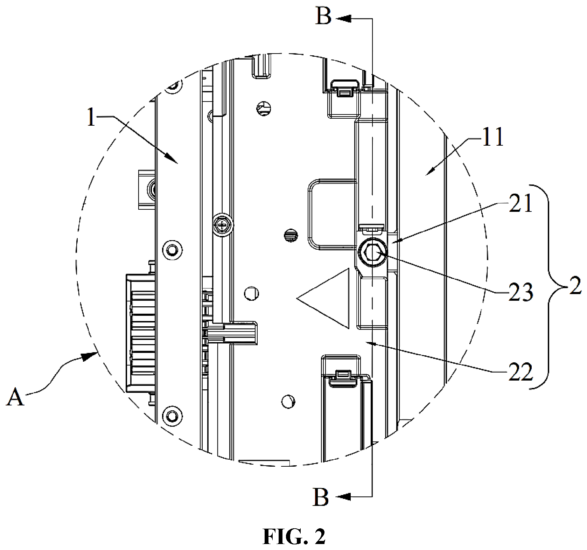

Referring to FIG. 2, the battery pack also includes a BDU 2 disposed in the accommodation cavity. The BDU 2 is located between the housing 1 and one of the expansion beams 11 located at the edge. The BDU 2 includes a fixing bracket 21, a BDU body 22, and a fastener 23. The fixing bracket 21 is fixedly connected to the expansion beam 11, and the BDU body 22 is fixedly mounted on the fixing bracket 21 through the fastener 23 to complete the mounting of the BDU 2 in the battery pack. When the cell 3 expands, the expansion beam 11 deforms elastically along the first direction and moves forward together with the BDU 2, causing the BDU body 22 to be compressed and deformed by both the expansion beam 11 and the housing 1, thereby affecting the service life. In the related art, the method of thickening an expansion beam 11 or adding a cross beam 12 (beam horizontally perpendicular to the length extension direction of the expansion beam 11) still cannot eliminate the phenomenon that the expansion beam 11 is compressed and elastically deformed, and the BDU 2 still has a safety risk of being compressed and damaged.

The BDU body 22 of this embodiment is provided with a sliding portion. The fastener 23 is fixedly connected to the fixing bracket 21 and can be slidably disposed on the sliding portion along the first direction. When the expansion beam 11 expands and deforms, the fastener 23 can slide on the sliding portion so that the sliding portion can absorb the displacement of the fixing bracket when the expansion beam 11 deforms.

In an implementation of this embodiment, the BDU body 22 is provided with a mounting waist-shaped hole 2201 penetrating the BDU body 22 along the second direction. The length direction of the mounting waist-shaped hole 2201 is parallel to the first direction. The fastener 23 passes through the mounting waist-shaped hole 2201 and is fixedly connected to the fixing bracket 21. The fastener 23 is slidably disposed in the mounting waist-shaped hole 2201. With this arrangement, when the expansion beam 11 deforms elastically, the expansion beam 11 drives the fastener 23 to slide in the mounting waist-shaped hole 2201 to avoid driving the BDU body 22 to move along the first direction. That is, the mounting waist-shaped hole 2201 absorbs the displacement of the fixing bracket 21 when the expansion beam 11 expands and deforms, thereby preventing the BDU body from being compressed and deformed due to the movement of the BDU body 22. This enhances the operational safety of the BDU body 22 and avoids occupying additional mounting space in the housing 1 of the battery pack for other components, and preventing the overall design and manufacturing of the battery pack from becoming complicated.

In addition, the mounting waist-shaped hole 2201 can absorb the manufacturing tolerance of the fixing bracket 21, ensuring that the fastener 23 can be accurately secured to the fixing bracket 21 through the mounting waist-shaped hole 2201, thereby improving the assemblability of the BDU body 22 and the manufacturability of the fixing bracket 21.

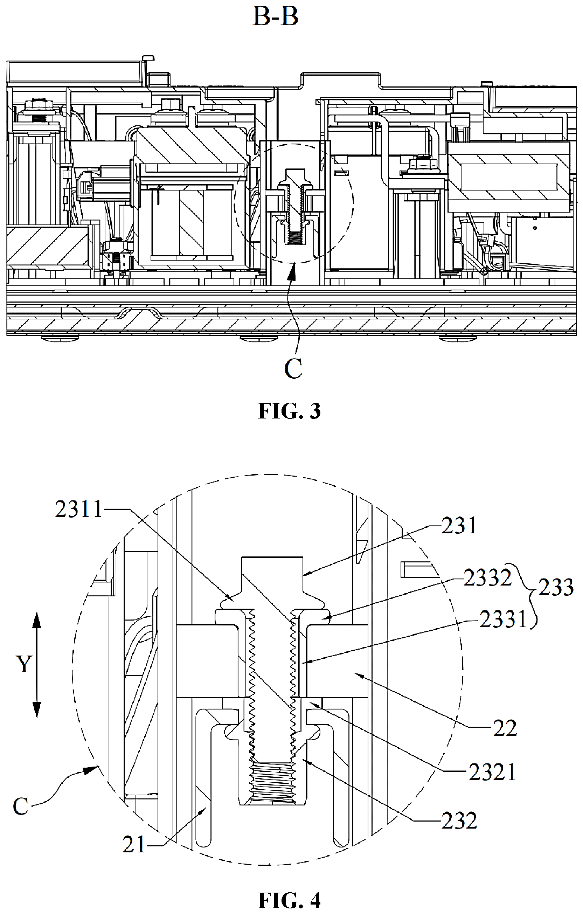

In this embodiment, referring to FIG. 4, the fastener 23 includes a locking bolt 231 and a rivet nut 232. The rivet nut 232 is disposed on the fixing bracket 21. The locking bolt 232 passes through the mounting waist-shaped hole 2201 and is connected to the rivet nut 232. The rivet nut 232 includes a first flange 2321 located at an end of the rivet nut 232. The first flange 2321 is sandwiched between the BDU body 22 and the fixing bracket 21. The locking bolt 231 and the rivet nut 232 enable the BDU body 22 to be fixedly mounted on the fixing bracket 21 through a threaded connection. This eliminates the need for forming internal threads on the fixing bracket 21, simplifies the fixing method, and facilitates the fixation of the BDU body 22 in a confined space.

In addition, the first flange 2321 is sandwiched between the BDU body 22 and the fixing bracket 21 so that on the one hand, the surface of the BDU body 22 can be protected, preventing the fixing bracket 21 from compressing and deforming the BDU body 22 when the fixing bracket 21 and the BDU body 22 are in direct contact; on the other hand, the first flange 2321 can replace the fixing bracket 21 in contacting the BDU body 22, thereby reducing the contact area between the fixing bracket 21 and the BDU body 22, enabling smoother movement of the fixing bracket 21, and reducing resistance from the BDU body 22.

With continued reference to FIG. 4, the fastener 23 also includes a first screw sleeve 233. The first screw sleeve 233 includes a screw sleeve body 2331 and a second flange 2332. The screw sleeve body 2331 is embedded in the mounting waist-shaped hole 2201. The second flange 2332 is disposed at an end of the screw sleeve body 2331 and abuts the BDU body 22. In addition, the locking bolt 231 includes a stud body and a third flange 2311. The stud body passes through the screw sleeve body 2331 and is connected to the rivet nut 232. The third flange 2311 is disposed on an outer periphery of the stud body and abuts the second flange 2332. It is to be understood that the BDU body 22 is usually a plastic member to achieve electrical insulation. The first screw sleeve 233 disposed on the BDU body 22 ensures that the pressure from the locking bolt 231 is applied to the first screw sleeve 233 rather than directly to the BDU body 22, thereby preventing the BDU body 22 from being crushed, deformed, or even damaged by the locking bolt 231.

The end of the screw sleeve body 2331 facing away from the second flange 2332 is flush with the opening of the mounting waist-shaped hole 2201 and is connected to the first flange 2321 to support the first screw sleeve 233 through the rivet nut 232. This can eliminate the pressure of the second flange 2332 on the BDU body 22 so that the second flange 2332 is in contact with the BDU body 22, ensuring that the locking bolt 231 and the first screw sleeve 233 can easily move when the expansion beam 11 and the fixing bracket 21 move forward when the battery module expands.

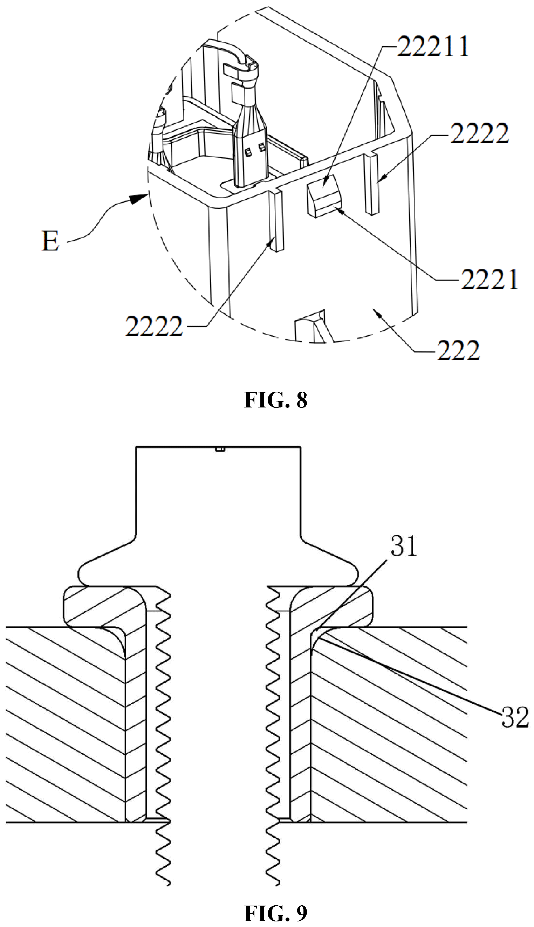

In this embodiment, as shown in FIG. 9, a first clearance chamfer 31 is disposed at the joint between the screw sleeve body 2331 and the second flange 2332, and a second clearance chamfer 32 is disposed at the opening of the mounting waist-shaped hole 2201 facing the second flange 2332. The first clearance chamfer 31 is disposed opposite to the second clearance chamfer 32. Thus, an assembly gap exists between the first screw sleeve 233 and the mounting waist-shaped hole 2201, thereby increasing the freedom of movement of the first screw sleeve 233 along the second direction Y and facilitating the assembly of the first screw sleeve 233. It is to be understood that the first clearance chamfer 31 and the second clearance chamfer 32 may be either round chamfers or oblique chamfers. This is not limited in the present application.

Optionally, referring to FIG. 1, a cross beam 12 is disposed in the housing 1. The length extension direction of the cross beam 12 is parallel to the first direction X. The two ends of the cross beam 12 along the first direction are each fixedly connected to an expansion beam 11 to effectively reduce the elastic deformation amount of the expansion beam 11, thereby reducing the moving distance of the fixing bracket 21, the locking bolt 231, and the first screw sleeve 233 and effectively avoiding a risk that the first screw sleeve 233 moves beyond the length of the mounting waist-shaped hole 2201 and causes the BDU body 22 to be compressed and deformed.

In this embodiment, three expansion beams 11 are spaced apart in the housing 1 along the first direction, and two cross beams 12 are spaced apart between two adjacent expansion beams 11 along the third direction. The cross beams 12 can reduce the elastic deformation of the expansion beams 11, keeping their elastic deformation within a reasonable range. Moreover, battery modules can be disposed on two opposite sides of the cross beams 12. For example, in this embodiment, one battery module is disposed between the two cross beams 12, and one battery module is disposed between one cross beam 12 and the housing 1. In this manner, a total of six battery modules can be accommodated inside the housing 1 to satisfy the energy density requirements under practical working conditions.

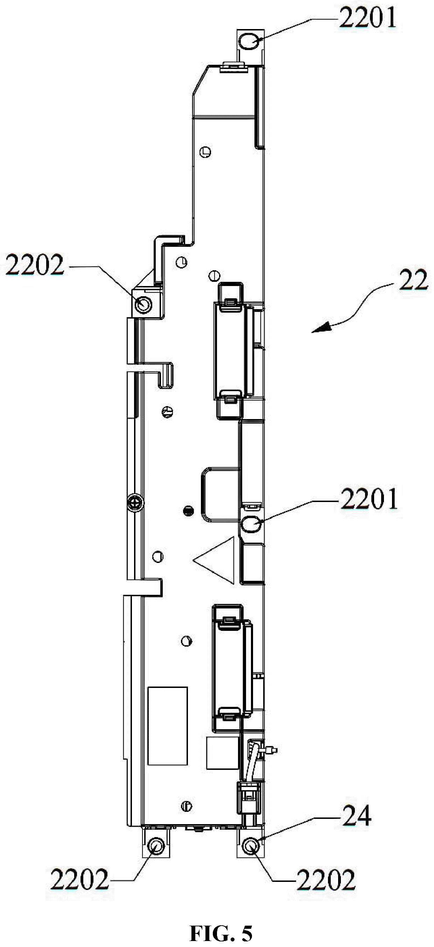

Optionally, in this embodiment, referring to FIG. 5, along the third direction, the BDU body 22 is provided with two mounting waist-shaped holes 2201, the expansion beam 11 is fixedly provided with multiple fixing brackets 21, and each mounting waist-shaped hole 2201 is fixedly connected to a corresponding fixing bracket 21 through one fastener 23, so that the mounting stability of the BDU body 22 in the battery pack can be improved through multiple fasteners 23. Moreover, since multiple battery modules are arranged on the expansion beam 11 along the third direction, these battery modules may expand to different extents during actual use due to factors such as heat dissipation conditions, environment, and material batches. In this embodiment, the two mounting waist-shaped holes 2201 are positioned at two positions on the expansion beam 11 that are prone to elastic deformation. This ensures that when the expansion beam 11 deforms at different positions, corresponding mounting waist-shaped holes 2201 can absorb the displacement generated by the expansion beam 11, the fixing bracket 21, and the fastener 23, thereby preventing the BDU body 22 from being compressed and deformed by the expansion beam 11 and the housing 1.

In this embodiment, one of the mounting waist-shaped holes 2201 is located at the end of the BDU body 22 adjacent to the expansion beam 11, and the other mounting waist-shaped hole 2201 is located at the middle of the BDU body 22 adjacent to the expansion beam 11. It is to be understood that the number and positions of the mounting waist-shaped holes 2201 are not limited in this embodiment. The number and positions of the mounting waist-shaped holes 2201 fall within the scope of protection of the present application as long as the BDU body 22 can be prevented from being compressed and deformed when the expansion beam 11 expands and deforms.

Optionally, the BDU body 22 of this embodiment is also provided with three mounting through holes 2202 on the outer peripheral surface. Among the three mounting through holes 2202, one of the mounting through holes 2202 is located at the other end of the BDU body 22 adjacent to the expansion beam 11 and is fixedly connected to the housing 1 through a locking member 24, and the other two mounting through holes 2202 are located on the side of the BDU body 22 facing away from the expansion beam 11 and are fixedly connected to the housing 1 through two locking members 24. This enhances the mounting stability of the BDU 2 in the battery pack by adding fixing points on the BDU body 22.

The locking member 24 includes a locking bolt and a second screw sleeve. The structure of the second screw sleeve is the same as that of the first screw sleeve 233. The details are not described here again in this embodiment. The second screw sleeve is embedded in the mounting through hole 2202. The locking bolt is threadedly connected to the housing 1 through the second screw sleeve. It is to be noted that in this embodiment, the second screw sleeve is fixed in the mounting through hole 2202 in a manner such as welding or bonding so that the second screw sleeve and the BDU body 22 are integrated. Since the locking bolt is not required to move in the mounting through hole 2202 along the first direction X, the second screw sleeve and the mounting through hole 2202 are not required to be designed to be movably connected. The second screw sleeve is fixed in the mounting through hole 2202 so that the mounting failure caused by the loosening of the locking member 24 can be reduced, thereby ensuring the operational stability of the BDU body 22.

Optionally, in this embodiment, to accelerate the mounting efficiency of the battery pack, the BDU body 22 is improved.

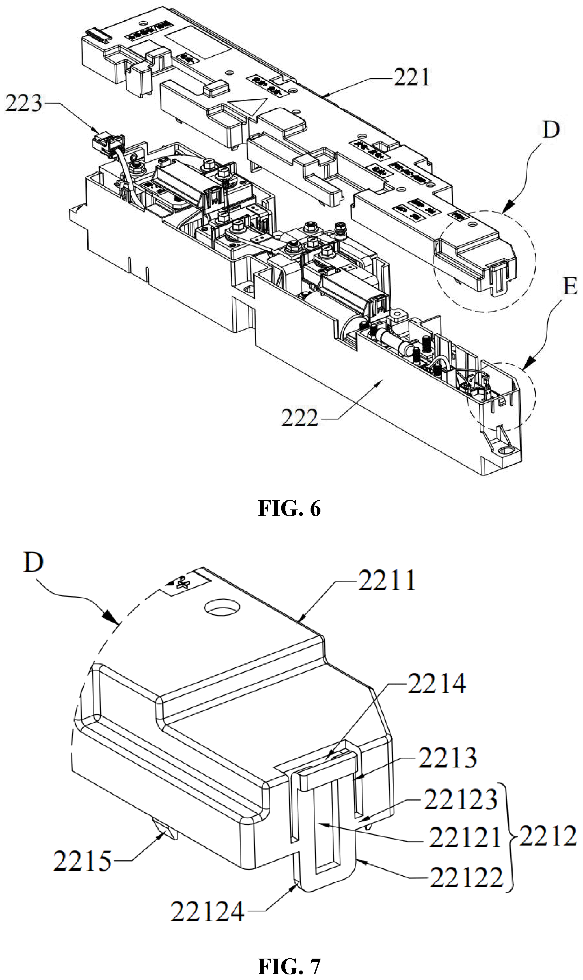

Referring to FIG. 6, the BDU body 22 includes a base 222 and an upper cover 221. An electrical component 222 is disposed in the base 223. The mounting waist-shaped hole 2201 is disposed in the base 222. A boss 2221 protrudes from an end surface of the base 222 along the third direction. The upper cover 221 includes an upper cover body 2211 and a clamping structure 2212. The clamping structure 2212 is disposed on the upper cover body 2211. The clamping structure 2212 has a clamping groove 22121. When the upper cover body 2211 is fastened to the base 222, the boss 2221 is clamped in the clamping groove 22121. In this manner, after the electrical component 223 is accurately disposed in the base 222, the upper cover 221 is sealed and fastened to the base 222, and the boss 2221 is clamped in the clamping groove 22121, so that the fixed connection between the upper cover 221 and the base 222 is completed, thereby simplifying the fixing manner between the upper cover 221 and the base 222, improving the assembly efficiency of the BDU 2, and ensuring good connection firmness between the upper cover 221 and the base 222.

It is to be understood that the electrical components 223 in the BDU 2 generally include a main fuse, a main relay, a pre-charge relay, a pre-charge resistor, a shunt, a positive-temperature-coefficient (PTC) relay, a PTC fuse, and a high-voltage high-rupturing capacity (HVH) fuse. The details are not described in this embodiment.

Optionally, a guide structure 2222 is disposed on the base 222. The guide structure 2222 is a guide rib plate shown in FIG. 8. The guide rib plate is located on one side of the boss 2221 and extends along the second direction. In a process in which the upper cover body 2211 is fastened to the base 222, the guide structure 2222 is in sliding contact with the clamping structure 2212 and guides the clamping groove 22121 to be clamped to the boss 2221, thereby effectively improving the efficiency of assembly precision between the upper cover body 2211 and the base 222 and reducing the assembly error. In this embodiment, on each of the two opposite sides of the boss 2221, one guide structure 2222 is disposed to prevent the guide structure 2222 from shifting during movement of the upper cover body 2211.

To improve operability, in this embodiment, the clamping structure 2212 includes a clamping plate 22122 and a rib 22123. The clamping plate 22122 has the clamping groove 22121. Each of the two opposite sides of the clamping plate 22122 is connected to the upper cover body 2211 through one rib 22123 to form an avoidance gap 2213 between the side wall of the clamping plate 22122 and the upper cover body 2211. A pressing groove 2214 is disposed between one end of the clamping plate 22122 and the upper cover body 2211. The pressing groove 2214 communicates with the avoidance gap 2213 to enable the clamping plate 22122 to rotate around the rib 22123. With this arrangement, when the upper cover 221 is required to be disassembled for repair and maintenance of the electrical component 223 in the base 222, the operator may press one end of the clamping plate 22122 to rotate the clamping plate 22122 around the rib 22123. During this process, the other end of the clamping plate 22122 moves outward so that an angle less than 90° is formed between the clamping plate 22122 and the boss 2221, thereby facilitating the disassembly of the upper cover 221.

The end of the clamping structure 2212 facing the boss 2221 has a first chamfer 22124. The end of the boss 2221 facing the clamping structure 2212 has a second chamfer 22211. The first chamfer 22124 and the second chamfer 22211 are opposite to each other. This reduces the sliding resistance between the clamping structure 2212 and the boss 2221 and facilitates clamping of the boss 2221 in the clamping groove 22121.

In this embodiment, at each of the two ends of the upper cover body 2211, one clamping structure 2212 is provided. One of the clamping structures 2212 is provided with a pressing groove 2214 while the other clamping structure 2212 is provided with no pressing groove 2214. This simplifies one of the clamping structures 2212 to improve the disassembly efficiency of the upper cover 221 and the base 222 and control the manufacturing cost of the upper cover body 2211. In other embodiments, the two clamping structures 2212 may each be provided with a pressing groove 2214 according to actual customer requirements. Therefore, both examples fall within the scope of protection of the present application.

Optionally, in this embodiment, two opposite inner side walls of the upper cover body 2211 are each provided with a limiting plate 2215 protruding downward. (The limiting plate 2215 on one side of the upper cover body 2211 is shown in the figure.) When the upper cover body 2211 is fastened to the base 222, the two limiting plates 2215 abut the two opposite inner side walls of the base 222 one to one. The two limiting plates 2215 cooperate with each other to prevent the upper cover body 2211 from shifting along the first direction X, thereby ensuring that the upper cover body 2211 is completely attached to the base 222 with no gap. Moreover, since both the upper cover 221 and the base 222 are made of plastic that is deformable, the base 222 tends to deform inwards during use. In this embodiment, the limiting plates 2215 can prevent the base 222 from tending to deform inwards, thereby making the side wall of the base 222 straight, maintaining the structural stability of the BDU body 22, and extending the service life of the BDU body 22.

## Claims

1. A battery pack, having a first direction and a second direction perpendicular to each other and comprising:
a housing (1), wherein an accommodation cavity is disposed in the housing (1), a battery module and an expansion beam (11) are disposed in the accommodation cavity, the battery module comprises a plurality of cells (3), the plurality of cells (3) are arranged in sequence along the first direction, at each of two ends of the battery module along the first direction, one expansion beam (11) is attached, and the expansion beam (11) is configured to generate elastic deformation along the first direction at least when the plurality of cells (3) expand; and
a battery disconnect unit (BDU) (2), wherein the BDU (2) is disposed in the accommodation cavity and located between the expansion beam (11) and the housing (1), the BDU (2) comprises a fixing bracket (21), a BDU body (22), and a fastener (23), the fixing bracket (21) is fixedly connected to the expansion beam (11), the BDU body (22) is provided with a sliding portion, and the fastener (23) is fixedly connected to the fixing bracket (21) and slidably disposed on the sliding portion along the first direction.

2. The battery pack of claim 1, wherein along the second direction, the BDU body (22) is provided with a mounting waist-shaped hole (2201) penetrating the BDU body (22) to form the sliding portion, a length direction of the mounting waist-shaped hole (2201) is parallel to the first direction, the fastener (23) passes through the mounting waist-shaped hole (2201) and is fixedly connected to the fixing bracket (21), and the fastener (23) is slidably disposed in the mounting waist-shaped hole (2201).

3. The battery pack of claim 2, wherein the fastener (23) comprises a locking bolt (231) and a rivet nut (232), the rivet nut (232) is disposed on the fixing bracket (21), the locking bolt (231) passes through the mounting waist-shaped hole (2201) and is connected to the rivet nut (232), the rivet nut (232) comprises a first flange (2321), and the first flange (2321) is sandwiched between the BDU body (22) and the fixing bracket (21).

4. The battery pack of claim 3, wherein
the fastener (23) further comprises a first screw sleeve (233), the first screw sleeve (233) comprises a screw sleeve body (2331) and a second flange (2332), the screw sleeve body (2331) is embedded in the mounting waist-shaped hole (2201), and the second flange (2332) is disposed at an end of the screw sleeve body (2331) and abuts the BDU body (22); and
the locking bolt (231) comprises a stud body and a third flange (2311), the stud body passes through the screw sleeve body (2331) and is connected to the rivet nut (232), and the third flange (2311) is disposed on an outer periphery of the stud body and abuts the second flange (2332).

5. The battery pack of claim 4, wherein a first clearance chamfer (31) is disposed at a joint between the screw sleeve body (2331) and the second flange (2332), a second clearance chamfer (32) is disposed at an opening of the mounting waist-shaped hole (2201) facing the second flange (2332), and the first clearance chamfer (31) is disposed opposite to the second clearance chamfer (32).

6. The battery pack of claim 4, wherein the end of the screw sleeve body (2331) facing away from the second flange (2332) is flush with an opening of the mounting waist-shaped hole (2201) and is connected to the first flange (2321) to support the first screw sleeve (233) through the rivet nut (232).

7. The battery pack of claim 2, wherein along a third direction, the BDU body (22) is provided with a plurality of mounting waist-shaped holes (2201), the expansion beam (11) is fixedly provided with a plurality of fixing brackets (21), each of the plurality of mounting waist-shaped holes (2201) is fixedly connected to a corresponding fixing bracket (21) through one fastener (23), the third direction is parallel to a length extension direction of the expansion beam (11), and the third direction, the second direction, and the first direction are perpendicular to each other.

8. The battery pack of any one of claims 2 to 7, wherein
the BDU body (22) comprises a base (222) and an upper cover (221), an electrical component (223) is disposed in the base (222), the mounting waist-shaped hole (2201) is disposed in the base (222), and a boss (2221) is disposed on a side wall of the base (222); and
the upper cover (221) comprises an upper cover body (2211) and a clamping structure (2212), the clamping structure (2212) is disposed on the upper cover body (2211), the clamping structure (2212) has a clamping groove (22121), and when the upper cover body (2211) is fastened to the base (222), the boss (2221) is clamped in the clamping groove (22121).

9. The battery pack of claim 8, wherein the base (222) is further provided with a guide structure (2222), and the guide structure (2222) is configured to, when the upper cover body (2211) is fastened to the base (222), guide the clamping groove (22121) to be clamped on the boss (2221).

10. The battery pack of claim 8, wherein at least two inner side walls of the upper cover body (2211) are each provided with a limiting plate (2215) protruding downward, and when the upper cover body (2211) is fastened to the base (222), the two limiting plates (2215) abut two opposite inner side walls of the base (222) one to one.

11. The battery pack of claim 8, wherein the clamping structure (2212) comprises a clamping plate (22122) and a rib (22123), the clamping plate (22122) has the clamping groove (22121), each of two opposite sides of the clamping plate (22122) is connected to the upper cover body (2211) through one rib (22123) to form an avoidance gap (2213) between the side wall of the clamping plate (22122) and the upper cover body (2211), a pressing groove (2214) is disposed between one end of the clamping plate (22122) and the upper cover body (2211), and the pressing groove (2214) communicates with the avoidance gap (2213) to enable the clamping plate (22122) to rotate around the rib (22123).

12. The battery pack of claim 8, wherein an end of the clamping structure (2212) facing the boss (2221) has a first chamfer (22124), an end of the boss (2221) facing the clamping structure (2212) has a second chamfer (22211), and the first chamfer (22124) and the second chamfer (22211) are opposite to each other.
